Europäisches Patentamt

European Patent Office

Office européen des brevets

(11) Veröffentlichungsnummer: **0 419 772 A1**

## (12) EUROPÄISCHE PATENTANMELDUNG

(21) Anmeldenummer: 90112183.0

(22) Anmeldetag: 27.06.90

(51) Int. Cl.5: **B01D 19/02**

Die Anmeldung wird, wie ursprünglich eingereicht, unvollständig veröffentlicht (Art. 93 (2) EPÜ). Die Stellen der Beschreibung oder der Patentansprüche, die offensichtlich Auslassungen enthälten, sind als Lücken an die entsprechende Stellen ersichtlich.

Ein Antrag gemäss Regel 88 EPÜ auf Hinzufügung von fehlenden Seiten in der Beschreibung und den Ansprüchen liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **20.09.89 DE 3931311**

(43) Veröffentlichungstag der Anmeldung: **03.04.91 Patentblatt 91/14**

(84) Benannte Vertragsstaaten: **AT BE CH DE ES FR GB IT LI NL SE**

(71) Anmelder: **Total Walther Feuerschutz GmbH Waltherstrasse 51 W-5000 Köln 80(DE)**

(72) Erfinder: **Grainer, Nikolaus, Dr. Im Kerberich 6 W-5068 Odenthal-Blecher(DE)**
Erfinder: **Roy, Reiner, Dipl.-Ing. Unterberg 107 W-5653 Leichlingen(DE)**

(54) **Verfahren und Vorrichtung zum Entsorgen eines Feuerlöschschaumes oder anderer Schäume.**

(57) Die Erfindung besteht aus einem Verfahren und einer Einrichtung zum Entsorgen eines beim Feuerlöschen oder dergleichen verwendbaren Leicht- und/oder Mittel- und/oder Schwerschaumes. Der Schaum wird von einem Gebläse oder dergleichen angesaugt, zerschlagen, und anschließend in einem nachgeschalteten Behälter konzentriert, wobei der größere Teil der Luft dabei aus dem Schaum abgetrennnt, und in einer weiteren nachgeschalteten Trennstufe nahezu auf das Volumen des eingesetzten Schaummittel-Wasser-Gemisches reduziert. Die Trennstufe kann eine Zentrifuge oder ein Zyklon sein. Bei der Entsorgung eines niedrig verschäumten Schwerschaumes wird dieser mittels einer Pumpe angesaugt und anschließend die Luft abgetrennt. In beiden Fällen wird anschließend das Gemisch einer weiteren Entsorgung zugeführt.

Fig.1

EP 0 419 772 A1

## VERFAHREN UND VORRICHTUNG ZUM ENTSORGEN EINES FEUERLÖSCHSCHAUMES ODER ANDERER SCHÄUME

Die Erfindung betrifft ein Verfahren zum Entsorgen eines beim Feuerlöschen verwendbaren Leicht- und/oder Mittel- und/oder Schwerschaumes.

Beim Feuerlöschschaum handelt es sich um ein Luftschaumverfahren, bei dem Wasser spezifisch leichter gemacht wird, insbesondere gegenüber brennbaren Flüssigkeiten. Dazu wird dem Wasserstrom ein Schaummittel beigemischt und die verschäumungsfähige Lösung in einem Schaumerzeuger durch Ansaugen von Luft verschäumt. Zur Bildung des Schaumes werden verschäumungsfähige Substanzen, die als Schaummittel bezeichnet werden, verwendet. Diese Schaummittel sind zum Teil auf synthetischer Basis aufgebaut und enthalten in bestimmten Anwendungsformen auch spezielle Fluortenside, die zwar eine verbesserte Löschwirkung aufweisen, demgegenüber bei der Entsorgung Schwierigkeiten bereiten. Aus einem vorbestimmten Gemisch aus Wasser und einem entsprechenden Schaummittel kann Schwer-, Mittel- oder Leichtschaum erzeugt werden. Die Schaumarten werden definiert nach ihren Verschäumungszahlen - dem Verhältnis des unverschäumten Gemisches zum erzeugten Schaumvolumen. Schwerschaum hat eine Verschäumungszahl von 4 bis 20, Mittelschaum von 20 bis 200 und Leichtschaum über 200 bis zu 1000. Hieraus ist ersichtlich, daß sowohl Mittel- als auch Leichtschaum große Volumina an Schaum erbringen.

Feuerlöschschaum wird nicht nur im Falle eines Brandes verwendet. Es ist auch unumgänglich Löschschaum für Probezwecke zu erzeugen. Stationäre Leicht- und Mittelschaumanlagen müssen nach erfolgreicher

Erhöhung der Austrittsgeschwindigkeit in eine schwerere Konsistenz zerschlagen wird, die anschließend durch Abtrennung des größeren Teils der Luft weiter konzentriert und zur weiteren Behandlung in einer nachgeschalteten Stufe die Restluft vom Schaummittel-Wasser-Gemisch getrennt wird.

Diese Nachbehandlung des Schaum-Luft-Gemisches kann im Anschluß an den Auffangbehälter mittels einer Pumpe und nachgeschaltetem Zyklon oder einer Zentrifuge mit nachgeschalteter Pumpe erfolgen.

Der reduzierte von einem Großteil seiner Luft befreite Schaum weist einen Verschäumungsfaktor von kleiner als 4 auf und läßt sich in dieser Form ohne weiteres weiter behandeln bzw. ohne Schwierigkeiten weiter entsorgen.

Mit der Erfindung wird der Vorteil erreicht, daß der Schaum nicht zusätzlich mit Wasser verdünnt bzw. niedergeschlagen wird. Somit ist eine ordnungsgemäße Entsorgung ohne Wasserzusatz gewährleistet.

Nach gesonderter Abscheidung der Restluft kann das Schaummittel-Wasser-Gemisch zur weiteren Entsorgung entweder in einen Behälter oder in einen Tankwagen gefüllt werden. Der Tankwagen kann zu einem Klärwerk gebracht werden, wo das Gemisch in einem zweiten Schritt in vernünftiger Dosierung dem Klärwerk zugegeben werden kann. Auch ist es möglich die Entsorgung an Ort und Stelle vorzunehmen, indem das Schaummittel-Wasser-Gemisch in eine Fällungsstufe und/oder Filter

ren Einrichtungen sind Schaumerzeuger vorrätig. Mit diesen Geräten wird der nicht lagerfähige Schaum an Ort und Stelle erzeugt. Leichtschaumgeneratoren sind am Austrittsstutzen mit einem Diffusor und einem Veredlernetz versehen, mit denen der Schaum erzeugt wird. Werden der Diffusor und das Veredlernetz abgenommen, sowie die Luftansaugöffnung abgedeckt, so kann der Generator als Gebläse arbeiten, an dessen Austrittsstutzen der Auffangbehälter für das SchaummittelWasser-Gemisch angebracht werden kann.

Der zerschlagene und konzentrierte Schaum wird mittels einer Pumpe abgesaugt und beim Durchgang durch die Pumpe und im anschließenden Zyklon weiter reduziert. Das Gebläse muß von einem Motor angetrieben werden. In weiterer bevorzugter Ausgestaltung ist vorgesehen, daß die Pumpe vom Antriebsmotor des Gebläses mit angetrieben wird.

Der zerschlagene Schaum kann auch in einer Siebzentrifuge, mit metallischem oder textilem Siebbelag weiter reduziert werden, wobei der weiter reduzierte Schaum über einen Behälter mit Tauchpumpe der Entsorgung zugeführt wird.

Sowohl im Brandfalle als auch bei der Probeverschäumung fallen Schaumberge an, die mehrere Meter hoch sein können. Erfolgt die Probeschäumung z.B. in einer Halle von 50 x 100 Meter Grundfläche, dann ergibt dies bei 2 m hoher Verschäumung einen Schaumberg von 10.000 m$^3$ Volumen. Um diesen Schaumberg zu entsorgen, wird vorzugsweise die Entsorgungseinheit durch den Schaum hindurchgefahren. Da bei ist eine mäanderförmige Entsorgungsweise besonders vorteilhaft. Dies bedeutet, daß die Entsorgungseinheit beispielsweise an einer Seitenwand der Halle in den Schaum bis zum ende der Halle hineinfährt, dort wendet, zum Ausgangspunkt zurückfährt, hier wieder wendet um wiederum bis an das Hallenende zu fahren. Auf diese Weise wird dann die gesamte Halle sehr schnell und zuverlässig vom Schaum befreit. Um diese Entsorgungsweise durchzuführen, ist es zweckmäßig, die Entsorgungseinheit auf einem fahrbaren Untersatz aufzusetzen, wobei ein Arbeiter den Ansaugschlauch führt und ein zweiter Arbeiter den Wagen nachschiebt.

Eine besonders vorteilhafte Ausbildung der Vorrichtung zur Durchführung des Entsorgungsverfahrens ist darin zu sehen, daß an dem Austrittsstutzen des Gebläses oder des Schaumgenerators ein eine Eintrittsöffnung aufweisender Auffangbehälter für den zerschlagenen Schaum angeschlossen ist, der der Eintrittsöffnung gegenüberliegend eine Prallwand aufweist, und daß im oberen Teil des Auffangbehälters ein Entlüftungsstutzen und im Bereich des unteren Teiles der Prallwand ein Austrittsstutzen vorgesehen ist, an den eine zu einer Pumpe geführte Leitung angeschlossen ist. Die Prallwand ist zur Horizontalen geneigt, wobei die Neigung vorzugsweise zwischen 45 und 65 Grad zur Horizontalen verläuft. Diese Prallwand hat die Wirkung, daß der im Gebläse zerschlagene Schaum gegen die schräge Prallwand strömt, dort angestaut wird und damit durch den nachrückenden Schaum in den Austrittsstutzen gedrückt wird, wo er von der Pumpe angesaugt werden kann. Hinter der Pumpe ist ein Zyklon vorgesehen, in dem die Restluft abgetrennt wird. Zu diesem Zweck ist im unteren Teil des Auffangbehälters ein Trichter vorgesehen. Der Auffangbehälterkann auch als Umlenkkanal mit Umlenkblechen ohne Entlüftungsstutzen ausgebildet sein, unter dem sich zur weiteren Schaumreduzierung die Siebzentrifuge befindet. Zufolge des Abstandes zwischen dem Austrittsstutzen des Auffangbehälters und der Zentrifuge, kann an dieser Stelle ein großer Teil der Luft aus dem Restschaum entweichen. Auch kann ein in die Zentrifuge hineinreichendes Verlängerungsrohr vorgesehen werden. Das verbleibende Schaum-Flüssigkeits-Gemisch fließt in einen Zwischenbehälter und wird von dort abgepumpt.

Um, insbesondere im Anwendungsfall ohne Zentrifuge, den Restschaum ohne Schwierigkeiten ansaugen und weiterpumpen zu können, ist es zweckmäßig Pumpen einzusetzen, die selbstansaugend, trockenlaufsicher und korrosionsfest sind.

Hinter der Zentrifuge bzw. dem Zyklon fließt maximal das 2 bis 4fache Volumen des ursprünglich eingesetzten Schaummittel-Wasser-Gemisches ab. Dies kann nun durch verschiede Maßnahmen einer endgültigen Entsorgung zugeführt werden.

Bei der Behandlung eines niedrig verschäumten Schwerschaumes mit einer Verschäumungszahl unter 10 wird der Schaum mittels einer Saugpumpe angesaugt. Die Luftabtrennung kann in einer Zentrifuge oder in einem Zyklon erfolgen. Auch kann im Bedarfsfalle ein Zyklon der Zentrifuge nachgeschaltet sein.

Entsorgungsverfahren und -vorrichtung sind in einem Ausführungsbeispiel näher beschrieben.
Es zeigt:
Fig. 1 eine schematische Darstellung der Entsorgungsvorrichtung,
Fig 1a Darstellung verschiedener Methoden der Restentsorgung,
Fig. 2 eine Draufsicht auf den Auffangbehälter,
Fig. 3 eine weitere Ausgestaltung der Entsorgungsvorrichtung,
Fig. 4 ein weiterer Auffangbehälter,
Fig. 5 + 6 Anordnungen für die Behandlung eines niedrig verschäumten Schwerschaumes,
Fig. 7 schematische Übersicht.

Die Vorrichtung 1 zur Entsorgung eines Feuerlöschschaumes oder dergleichen besteht im wesentlichen aus einem Gebläse 2, einem Auffangbehälter 10, einer Pumpe 15, einem Zyklon 22 und einer nachfolgenden Entsorgung 31 oder 32 oder 33 oder 36, 38.

Das Gebläse 2 mit seinem Rotor 3 wird von einem Motor 4 angetrieben, wobei Motor 4 und Rotor 3 auf einer Welle 5 angeordnet sind. Einerseits ist das Gebläse 2 mit einem Ansaugstutzen 6 versehen, an den ein Schlauch 7 mit einer speziellen Ansaugvorrichtung 8 bzw. 8a angeschlossen ist. Andererseits ist ein Austrittsstutzen 9 vorgesehen, der die Eintrittsöffnung 10a für einen Auffangbehälter 10 bildet. Dieser weist an der gegenüberliegenden Seite eine geneigte Prallwand 11 auf, der an der oberen Seite eine Luftabsaugöffnung 12 und an der unteren Seite ein Schaumabzugstrichter 13 zugeordnet sind. Aus dem Trichter 13 wird der zerschlagene und konzentrierte Schaum über eine Leitung 14 von einer Pumpe 15 angesaugt und beim Durchtritt durch die Pumpe 15 weiter reduziert. Die Pumpe 15 wird von der Motorwelle 5 aus angetrieben. Zu diesem Zweck ist auf der Pumpenwelle 16 ein Riemenrad 17 und auf der Motorwelle 5 ein Riemenrad 18 vorgesehen. Ein Riemen 19 vervollständigt den Riemenantrieb. Von der Pumpe 15 ist eine Abflußleitung 20 mit einem Absperrorgan 21 zu einem Zyklon 22 geführt, der einen Luftabzugsstutzen 23 mit überdruckregelung und eine Abflußleitung 24 aufweist. Die Leitungen 14, 20 und 24 können aus Schläuchen bestehen. Dabei kann vorteilhafterweise am Ende der Schlauchleitung 24 eine C-Kupplung 25 zum Anschluß eines Feuerwehrschlauches vorgesehen sein. Im Ausführungsbeispiel ist die Vorrichtung 1 auf einem Fahrzeug 26 montiert, das aus einer Bodenplatte 27, einem Fahrwerk 28 und Stützorganen 29 besteht.

Aus dem Zyklon tritt ein Schaummittel-Wasser-Gemisch aus. Dies kann in verschiedener Weise weiter entsorgt werden. Zu diesem Zweck sind im Ausführungsbeispiel vier unterschiedliche Möglichkeiten dargestellt. So kann die Entsorgungsleitung 30 zu verschiedenen Entsorgungseinrichtungen geführt werden. Die Entsorgungsleitung 30a ist zu einem Abwasserkanal 31 geführt, aus dem das Gemisch zur Kläranlage geführt wird. Über eine Leitung 30b wird das Gemisch einem Tankfahrzeug 32 zugeführt, mit dem das Gemisch zu einer entfernt liegenden Entsorgung gebracht wird. Eine solche Entsorgung kann beispielsweise das Klärwerk sein. Hier wird das Gemisch übernommen und dosiert der Kläranlage zugegeben. Damit ist eine Entsorgung gemäß seiner biologischen Abbaubarkeit gewährleistet und sichert das Gleichgewicht der Kläranlage. Ferner kann das Gemisch auch in spezielle mit Bakterien arbeitende biologische Entsorgungsanlagen eingebracht werden. Mit 33 ist ein großer Absetzbehälter bezeichnet, dem das Gemisch über eine Leitung 30c zugeführt wird. Durch Zugabe von Flockungshilfsmitteln mittels der Leitung 37 setzt sich das Schaummittel ab. Dabei kann reines Wasser über eine Abzugsleitung 34 und das Schaummittel als Bodensatz mittels einer Leitung 35 entnommen werden. Die vierte Entsorgungseinheit besteht aus einem Mischorgan 36 und einem nachgeschalteten Filter 38. Über Leitung 30d wird dem Mischorgan 36 das zu entsorgende Gemisch und über Leitung 37a ein Flockungshilfsmittel bzw. ein Schaummittelbinder zudosiert. Im Filter 38 wird das Wasser vom Schaummittel getrennt und als Reinwasser bei 40 abgezogen bzw. einem Kanal 31 zugeführt. Das Schaummittel wird über eine Leitung 39 abgezogen und kann von dort weiter verwendet bzw. deponiert oder verbrannt werden.

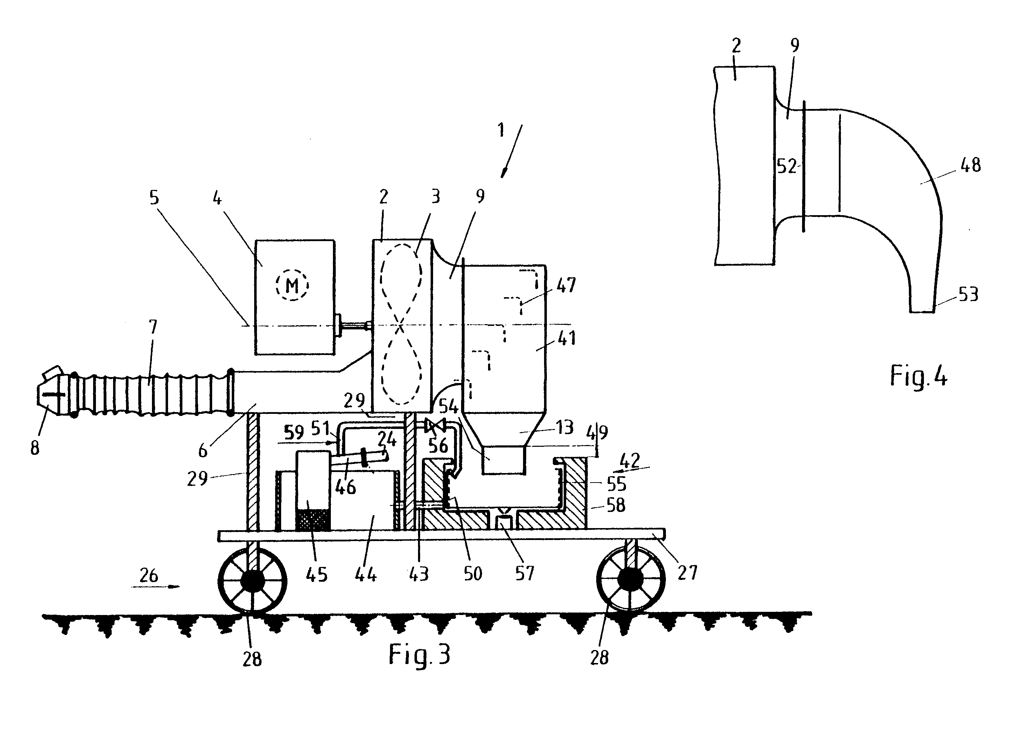

Nach Fig. 3 ist eine weitere Ausgestaltung der Entsorgungseinrichtung möglich. Der Auffangbehälter ist als Umlenkkanal 41 mit einer Umlenkung von 90° nach unten, sowie mit Umlenkblechen 47 ausgebildet und am unteren Ende mit dem Austrittsstutzen 13 versehen. Mit Abstand 49 befindet sich darunter eine Siebzentrifuge 42 mit Siebbelag SO. Eine Leitung 43 ist zu einem Behälter 44 geführt, in dem sich die Flüssigkeit mit leichten Schaumanteilen sammelt und mittels einer Pumpe 45 dem Abführrohr 46 zugeführt wird. Von der Leitung 46 kann ein Bypass 51 mit Absperrorgan 56 abgezweigt und in den oberen Teil der Zentrifuge 42 eingeführt werden. Damit kann ein Teil der Flüssigkeit auf den oberen Rand der Zentrifugentrommel gespritzt werden, womit ein Übertreten von Schaum aus der Zentrifuge 42 verhindert wird. In den Bypass 51 ist eine Zumischeinrichtung 59 für ein schaumzerstörendes Mittel vorgesehen. Die Zentrifuge 42 besteht aus einem Gehäuse 58, in dem eine Schleudertrommel 55 mit dem Siebbelag 50 drehbar abgestützt und von einem Motor 57 antreibbar ist. In das Innere der Schleudertrommel 55 kann ein mit dem Austrittsstutzen 13 verbundenes Verlängerungsrohr 54 eingeführt sein.

Die Zentrifuge 42 und der Behälter 44 sind auf der Bodenplatte 27 des Fahrzeuges 26 abgestützt.

Fig. 4 zeigt eine weitere Ausgestaltung des Auffangbehälters, der aus einem Rohr 48 besteht, das sich vom Eintrittsquerschnitt 52 zum Austrittsquerschnitt 53 hin in einem Verhältnis von 1,2-3,0 : 1 verjüngt. Durch diese Ausgestaltung können die Umlenkbleche 47 entfallen.

Es gehört zum Wesen der Erfindung, daß auch die Entsorgungseinheiten 36 und 38 auf dem Fahrzeug 26 montiert werden und somit zur Entsorgungsvorrichtung 1 gehören können.

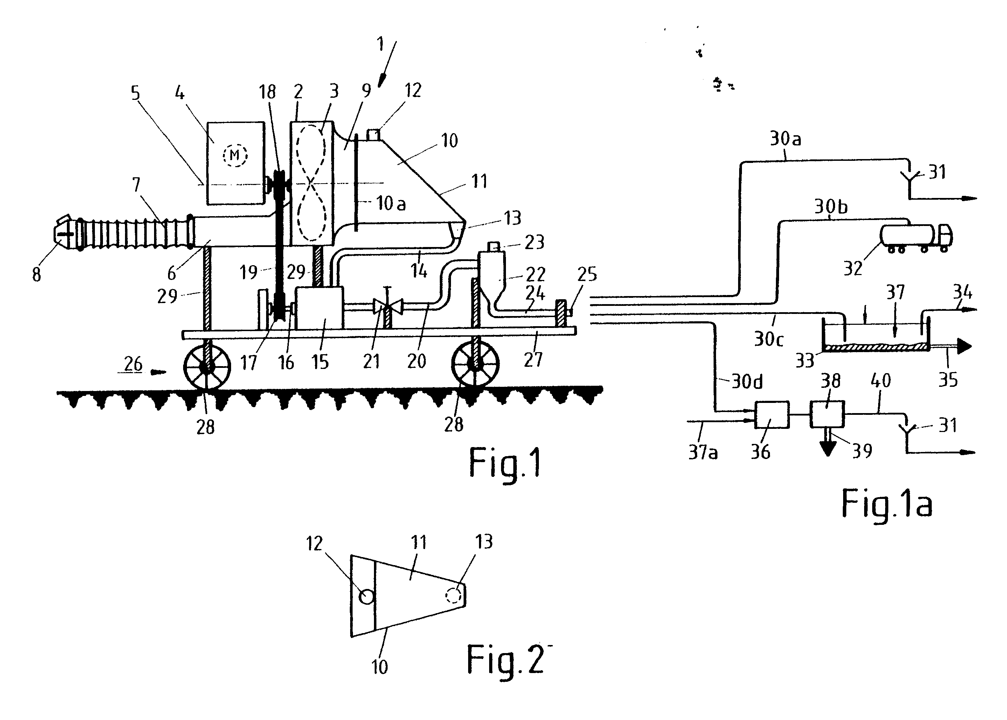

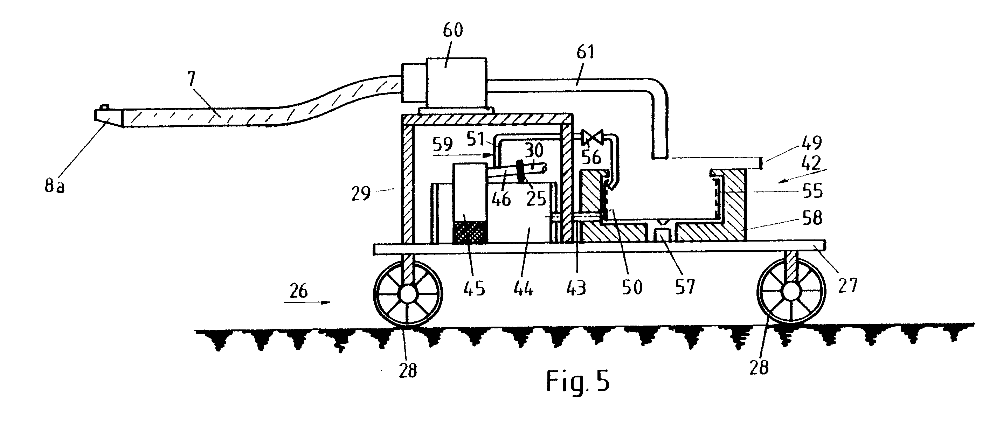

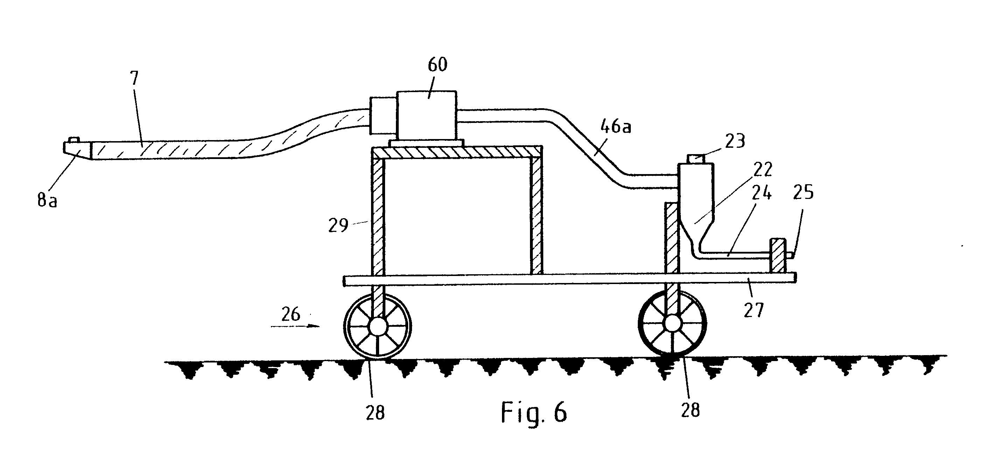

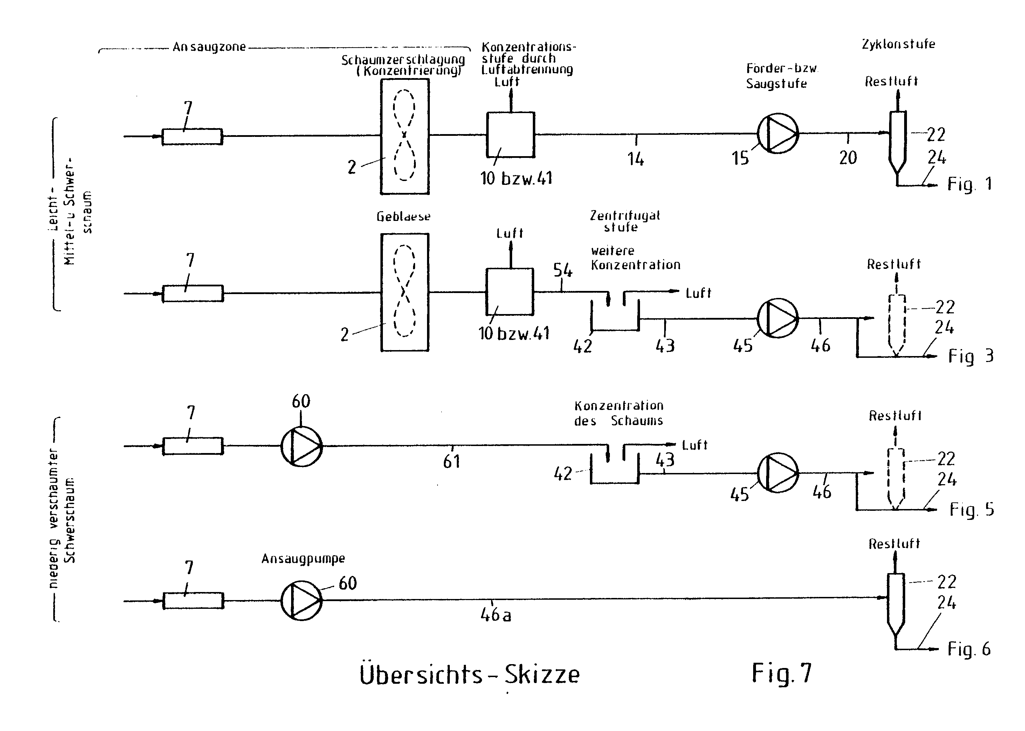

In den Figuren 5 und 6 sind zwei Ausführungsformen dargestellt, mit denen ein niedrig verschäumter Schwerschaum mit einer Verschäumungszahl unter 10 entsorgt werden kann. Die Zerschlagung eines derartigen Schaumes ist nicht erforderlich. Folglich kann das Gebläse entfallen. Ind diesem Falle wird der Schaum mittels einer Pumpe 60 über den Schlauch 7 angesaugt. Eine Konzentration des Schaumes und damit die Entfernung der Luft kann mittels der Siebzentrifuge 42 oder des Zyklons 22 über Leitungen 61 oder 46a erfolgen. Beim Einsatz einer Zentrifuge 42 kann auch noch ein Zyklon 22 nachgeschaltet werden, in den die Leitung 46 eingeführt ist. In Fig. 7 mit einer schematischen Übersicht zu den Figuren 1, 3, 5 und 6 ist dargestellt, daß die Leitung 46 durch Umgehung der Zyklone 22 direkt in die Leitung 24 eingeführt werden kann. Auch bei dieser Ausführungsform wird das Gemisch der Entsorgung gemäß der Fig. 1a zugeführt.

## Ansprüche

1. Verfahren zum Entsorgen eines beim Feuerlöschen verwendbaren Leicht- und/oder Mittel-und/oder Schwerschaumes, dadurch gekennzeichnet, daß Schaum mittels eines Gebläses angesaugt, durch dieses hindurchgeführt und dabei unter Erhöhung der Austrittsgeschwindigkeit in eine schwerere Konsistenz zerschlagen wird, die anschließend durch Abtrennung des größeren Teils der Luft weiter konzentriert und zur weiteren Behandlung in einer nachgeschalteten Stufe die Restluft vom Schaummittel-Wasser-Gemisch getrennt wird.

2. Verfahren nach Anspruch 1, dadurch gekennzeichnet, daß der konzentrierte Schaum mittels einer Pumpe angesaugt und die Restluft mittels einer Zyklonwirkung abgetrennt wird.

3. Verfahren nach Anspruch 1, dadurch gekennzeichnet, daß der zerschlagene Schaum umgelenkt und in eine oben offene Zentrifugalstufe eingeführt wird, aus der das weiter reduzierte Schaummittel-Wasser-Gemisch über eine Pumpenstufe weitergeführt wird.

4. Verfahren nach Anspruch 1 bis 3, dadurch gekennzeichnet, daß das Schaummittel-Wasser-Gemisch zur weiteren Entsorgung in einen Behälter oder in einen Tankwagen gefüllt wird.

5. Verfahren nach Anspruch 1 bis 3, dadurch gekennzeichnet, daß das Schaummittel-Wasser-Gemisch zur weiteren Entsorgung einer Fällungsstufe zugeführt, in dieser unter Zugabe eines Flockungshilfsmittels (Schaummittelbinder), Konzentrat (Schaummittel) und Wasser getrennt werden.

6. Verfahren nach den Ansprüchen 1 bis 3, dadurch gekennzeichnet, daß als Gebläse ein Leichtschaumgenerator ohne Diffusor und Veredlernetz mit verschlossener Luftansaugung verwendet wird.

7. Verfahren nach den Ansprüchen 1 und 6, dadurch gekennzeichnet, daß die Pumpe zum Fördern des konzentrierten Schaumes von dem Antrieb des Gebläses bzw. des Leichtschaumgenerators angetrieben wird und am Ausgang einen Förderdruck von mindestens 1 bar aufweist.

8. Verfahren nach den Ansprüchen 1 bis 7, dadurch gekennzeichnet, daß die Entsorgung des Schaumes durch fortschreitendes heranführen der Entsorgungseinheit an den Schaum erfolgt, und vorzugsweise in mäanderförmiger Weise vorgenommen wird.

9. Verfahren zum Entsorgen eines beim Feuerlöschen verwendbaren niedrig verschäumten Schwerschaumes, dadurch gekennzeichnet, daß der Schaum mittels einer Pumpe angesaugt, durch diese hindurch geführt und zur weiteren Behandlung in einer nachgeschalteten Stufe die Restluft vom Schaummittel-Wasser-Gemisch getrennt wird.

16. Vorrichtung nach Anspruch 23, dadurch gekennzeichnet, daß der Auffangbehälter aus einem sich zum Stutzen (13) hin im Querschnitt verjüngenden Rohr (48) besteht, wobei die Verjüngung ein Verhältnis von Eintrittsdurchmesser (52) zu Austrittsdurchmesser (53) von 1,2-3,0 : 1 aufweist.

17. Vorrichtung zur Durchführung des Verfahrens nach den oder einem oder mehreren der Ansprüche 9 bis 12, dadurch gekennzeichnet, daß von einer Ansaugpumpe (60) eine Leitung (46a bzw. 61) abgeht, die zu einer Konzentrationsanlage (22 bzw. 42) geführt ist.

18. Vorrichtung nach den Ansprüchen 13, 15, 16 oder 17 dadurch gekennzeichnet, daß unterhalb des Auffangbehälters (41,48 bzw. 13) oder der Leitung (61) mit Abstand (49) eine Filter-Zentrifuge (42) mit einem metallischen oder einem textilen Siebbelag (50) angeordnet und über einen Abfluß, z.B. eine Leitung (43) mit einem Behälter (44) mit Saugpumpe (45) verbunden ist.

19. Vorrichtung nach den Ansprüchen 15 bis 18, dadurch gekennzeichnet, daß der Austrittsstutzen (13) oder die Leitung (61) mit einem Verlängerungsrohr (54) versehen ist.

20. Vorrichtung nach Anspruch 19, dadurch gekennzeichnet, daß das Verlängerungsrohr (54) bis in den unteren Bereich der Schleudertrommel (55) der Zentrifuge (42) reicht.

21. Vorrichtung nach Anspruch 18, dadurch gekennzeichnet, daß die Pumpe (45) mit einer weiterführenden Leitung (46) versehen ist.

22. Vorrichtung nach Anspruch 21, dadurch gekennzeichnet, daß von der Leitung (46) ein Bypass (51) mit Absperrorgan (56) abgezweigt und in den oberen Teil der Zentrifuge (42) eingeführt ist.

23. Vorrichtung nach Anspruch 21, dadurch gekennzeichnet, daß zum Einführen eines schaumzerstörenden Mittels eine Zumischeinrichtung (59) vorgesehen ist.

24. Vorrichtung nach den Ansprüchen 13 oder 17, dadurch gekennzeichnet, daß der Pumpe (15) oder der Leitung (46a) ein Zyklon (22) mit Abflußleitung (24) nachgeschaltet, und der vom Zyklon abgehende Entlüftungsstutzen (23) mit einer regelbaren Überdruckvorrichtung versehen ist.

25. Vorrichtung nach Anspruch 14, dadurch gekennzeichnet, daß die Prallwand (11) zur Horizontalen geneigt ist.

26. Vorrichtung nach Anspruch 25, dadurch gekennzeichnet, daß die Neigung der Prallwand (11) zwischen 45 und 65 Grad zur Horizontalen verläuft.

27. Vorrichtung nach Anspruch 14, dadurch gekennzeichnet, daß an den als Trichter ausgebildeten Austrittsstutzen (13) eine zur Pumpe (15) geführte Leitung (14) angeschlossen ist.

28. Vorrichtung nach Anspruch 24, dadurch gekennzeichnet, daß die vom Zyklon (22) bzw. von der Pumpe (45) abgehende Abflußleitung (24 bzw. 46) als Schlauch ausgebildet ist und daß das Ende der Abflußleitung (24,46) mit einer C-Kupplung (25) zum Anschluß eines Feuerwehrschlauches versehen ist.

29. Vorrichtung nach den Ansprüchen 13 bis 26, dadurch gekennzeichnet, daß die Pumpen (15,45,60) selbstansaugend, trockenlaufsicher und korrosionsfest ausgebildet sind.

30. Vorrichtung nach Anspruch 13, dadurch gekennzeichnet, daß auf der Pumpenwelle (16) ein Riemenrad (17) sitzt, das mittels eines Treibriemens (19) von einem auf der Motorwelle (5) des Gebläseantriebes (4) sitzenden Riemenrades (18) antreibbar ist.

31. Vorrichtung nach einem oder mehreren der Ansprüche 13 bis 30, dadurch gekennzeichnet, daß die vom Zyklon (22), bzw. von der Pumpe (45 bzw. 60) abgehende Ablfußleitung (24 bzw. 46 bzw. 46a) über eine Kupplung zu einem Abwasserkanal (31) oder zu einem Tankwagen (32) oder zu einem Entsorgungsbehälter (33) geführt ist.

32. Vorrichtung nach einem oder mehreren der Ansprüche 13 bis 31, dadurch gekennzeichnet, daß der Entsorgungsbehälter (33) zum Ausflocken mittels eines Flockungshilfsmittels (Schaummittelbinder) eingerichtet sowie mit einem Ablaßstutzen (34) für das gereinigte Wasser und einem Ablaßstutzen (35) für das abgetrennte Schaummittel versehen ist.

39. Vorrichtung nach Anspruch 38, dadurch gekennzeichnet, daß das Fahrzeug (26) von Hand verschiebbar ist.

40. Vorrichtung nach den Ansprüchen 18 und 21, dadurch gekennzeichnet, daß die Leitung (46) in einen Zyklon (22) geführt ist.

Fig.1

Fig.1a

Fig.2

EP 0 419 772 A1

Fig. 4

Fig. 3

Fig.5

Fig. 6

EP 0 419 772 A1

Ansaugzone

Schaumzerschlagung
(Konzentrierung)

Konzentrationsstufe durch
Luftabtrennung
Luft

Förder-bzw.
Saugstufe

Zyklonstufe

Restluft

leicht-
Mittel-u Schwerschaum

7

2

10 bzw.41

14

15

20

22

24

**Fig. 1**

Geblaese

Luft

Zentrifugal
stufe

weitere
Konzentration

Luft

Restluft

7

2

10 bzw.41

54

42

43

45

46

22

24

**Fig 3**

niedrig verschaumter
Schwerschaum

60

7

61

Konzentration
des Schaums

Luft

Restluft

42

43

45

46

22

24

**Fig. 5**

Ansaugpumpe

60

7

46a

Restluft

22

24

**Fig. 6**

# Übersichts-Skizze

# Fig. 7

**Europäisches Patentamt**

# EUROPÄISCHER RECHERCHENBERICHT

Nummer der Anmeldung

## EP 90 11 2183

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 284 993 (SEBALD)<br>* Spalte 4, Zeilen 19-27 *<br>— — — | 9 | B 01 D 19/02 |
| A | DE-A-3 519 374 (SCHWEISS et al.)<br>* Zusammenfassung *<br>— — — | 1 | |
| A | US-A-3 407 569 (HENDRICKS)<br>* Zusammenfassung *<br>— — — | 1 | |
| A | PATENT ABSTRACTS OF JAPAN, Band 13, Nr. 227 (C-600), 25 mai 1989;<br>& JP-A-01 038 107 (KANZAKI PAPER MFG) 08-02-1989<br>— — — — — | 1 | |

| RECHERCHIERTE SACHGEBIETE (Int. Cl.5) |
|---|
| C 02 F<br>B 01 D |

Der vorliegende Recherchenbericht wurde für alle Patentansprüche erstellt

| Recherchenort | Abschlußdatum der Recherche | Prüfer |
|---|---|---|
| Den Haag | 10 Dezember 90 | KASPERS H.M.C. |